# EUROPEAN PATENT SPECIFICATION

(11) **EP 2 436 582 B1**
(45) Date of publication and mention of the grant of the patent: **01.05.2013**
(21) Application number: 11182655.8
(22) Date of filing: 26.09.2011
(51) Int. Cl.: B62J 17/00, B62J 17/02

(54) **Straddle type vehicle**
Grätschsitzfahrzeug
Véhicule de type à enfourcher

(30) Priority: 29.09.2010 JP 2010219593
(43) Date of publication of application: 04.04.2012
(73) Proprietor: Honda Motor Co., Ltd., Tokyo 107-8556 (JP)
(72) Inventor: Miyamoto, Shiro, Saitama, 351-0193 (JP); Omae, Akira, Saitama, 351-0193 (JP); Tanaka, Masatsugu, Saitama, 351-0193 (JP); Teofilo, Plaza Carcia, 00143 Roma (IT)
(74) Representative: Beder, Jens

(56) References cited:
- EP-A2- 0 021 657
- EP-A2- 2 055 624
- JP-A- 11 278 344
- JP-A- 2008 247 325
- US-A1- 2009 008 182

## Description

The present invention relates to a straddle type vehicle provided with a side radiator.

As the conventional straddle type vehicle, there has been known a straddle type vehicle which has a so-called side radiator arranged on the side of a body frame, a side cowl arranged on the side of the side radiator and an exhaust wind port provided on the side of the side cowl and discharging exhaust wind from a radiator (for example, see Patent Document 1).
The exhaust wind port is arranged with the outside edge in the width direction of the vehicle away from the radiator at only a fixed distance in the width direction of the vehicle. A fast traveling wind in flow velocity flows on the outside surface of the cowl during traveling of the motorcycle, which thereby reduces the pressure in the vicinity of the outside surface. As the conventional example, arrangement of the exhaust wind port enables the exhaust wind to be easily discharged from the space between the side radiator and the outside edge in the width direction of the vehicle of the exhaust wind port.

However, the side cowl of the straddle type vehicle described in Japanese Patent Publication No. H11-278344
is formed so as to be protruding in the width direction of the vehicle in a front view. Therefore, the problem was that the frontal projected area of the straddle type vehicle is large and the running resistance is increased.

In order to reduce the running resistance, it may be possible to reduce the amount of protrusion of the side cowl in the width direction of the vehicle. However, only the reduction in the amount of protrusion of the side cowl in the width direction of the vehicle leads to the narrower space between the side radiator and the outside edge in the width direction of the vehicle of the exhaust wind port, which thereby cause the problem of the decrease in the exhaust wind efficiency of the radiator.

JP 11 278344 A on which the preamble of claim 1 is based discloses a motorcycle with a body frame in which a water-cooled engine is supported. For cooling down the cooling water of the engine a radiator is arranged on a side of the body frame. Besides the radiator a radiator side cowl is arranged and the radiator side cowl has an exhaust wind port facing the radiator.

It is an object of the present invention to provide a straddle type vehicle that enables to reduce the running resistance by limiting the frontal projected area of the vehicle, and at the same time to ensure the exhaust wind efficiency of the radiator arranged on the side of the body frame.

To achieve the above object, the present invention regarding Claim 1 is characterized in that in a straddle type vehicle which has a body frame, a water-cooled engine supported by the body frame and cooled down by cooling water, a radiator arranged on the side of the body frame and cooling down the cooling water and a radiator side cowl arranged on the outer side of the radiator and having an exhaust wind port which faces the radiator, and wherein the outside edge in the width direction of the vehicle of the exhaust wind port of the radiator side cowl is arranged with a space from the radiator, the radiator side cowl comprises a swelling face portion disposed on the lower portion of the radiator side cowl and swelling outward in the width direction of the vehicle with a smooth surface in the front-and-rear direction; a concave face portion arranged in front of and above the radiator in a side view and having a concaved surface inside in the width direction of the vehicle; a stepped portion extending in the width direction of the vehicle along an upper edge of the swelling face portion as well as joining the swelling face portion and the concave face portion; and a stepped-portion exhaust wind port arranged behind the concave face portion as well as above the stepped portion and functioning as an exhaust wind port.

In addition to the configuration described in Claim 1, the present invention regarding Claim 2 is characterized in that the stepped portion extends to the rear portion of the radiator side cowl.

In addition to the configuration described in Claim 2, the present invention regarding Claim 3 is characterized in that the swelling face portion is formed in spreading fan-like shape such that the width thereof in vertical direction becomes larger as it approaches the rear thereof.

In addition to the configuration described in any of Claims 1 to 3, the present invention regarding Claim 4 is characterized in that, there is further provided an under cowl arranged below the radiator side cowl, covering the lower portion of the vehicle body, and in that the under cowl has a lower side exhaust wind port facing the radiator and functioning as the exhaust wind port.

In addition to the configuration described in Claim 4, the present invention regarding Claim 5 is characterized in that the under cowl has a rear face portion disposed behind the radiator and extending toward the inside in the width direction of the vehicle and a cutout portion formed by being cut out such that the rear surface portion is open outward in the width direction of the vehicle, and in that the radiator side cowl is arranged such that a rear portion thereof covers the cutout portion from the side, and has a rear-portion exhaust wind port enclosed by the cutout portion and the rear portion and functioning as the exhaust wind port.

According to Claim 1 of the present invention, the radiator side cowl comprises a swelling face portion disposed on the lower portion of the radiator side cowl and swelling outward in the width direction of the vehicle with a smooth surface in the front-and-rear direction; the concave face portion arranged in front of and above the radiator in a side view and having a concaved surface inside in the width direction of the vehicle; the stepped portion extending in the width direction of the vehicle along the upper edge of the swelling face portion as well as joining the swelling face portion and the concave face portion; and the stepped-portion exhaust wind port arranged behind the concave face portion as well as above the stepped portion and functioning as an exhaust wind port. Thus, while reducing the frontal projected area of the vehicle due to the presence of the concave face portion, the presence of the swelling face portion allows the traveling wind to flow rearward smoothly as well as with a fast flow velocity. As a result, it is possible to discharge the traveling wind (exhaust wind), which is used for cooling down the cooling water of the radiator, efficiently from the stepped-portion exhaust wind port. Accordingly, while decreasing the running resistance by reducing the frontal projected area of the vehicle, it is possible to ensure the exhaust wind efficiency of the radiator arranged on the side of the body frame.

According to Claim 2 of the present invention, the stepped portion extends up to the rear portion of the radiator side cowl. Therefore, by arranging the stepped-portion exhaust wind port up to the rear portion of the radiator side cowl, it is possible to extend the length thereof as long as possible in the front-and-rear direction of the vehicle. Accordingly, the amount of exhaust wind can be increased by increasing the area of the stepped-portion exhaust wind port, which thereby further improves the exhaust wind efficiency.

According to Claim 3 of the present invention, the swelling face portion is formed in spreading fan-like shape such that the width thereof in vertical direction becomes larger as it approaches the rear thereof. Thus, it is possible to increase the flow velocity of the traveling wind flowing over the swelling face portion as it approaches the rear, and at the same time to increase the negative pressure of the exit side (downstream side) of the stepped-portion exhaust wind port, which can further enhance the exhaust wind efficiency.

According to Claim 4 of the present invention, there is further provided the under cowl arranged below the radiator side cowl and covering the lower portion of the vehicle body. The under cowl has a lower side exhaust wind port facing the radiator. Accordingly, it is possible to increase the amount of exhaust wind by increasing the area of the exhaust wind port with a simple configuration, which thereby further improves the exhaust wind efficiency.

According to Claim 5 of the present invention, the under cowl has the rear face portion and the cutout portion. The radiator side cowl is arranged such that the rear portion thereof covers the cutout portion from the side, and has the rear-portion exhaust wind port which functions as an exhaust wind portion in such a way to be enclosed by the cutout portion and the rear portion of the radiator side cowl. Accordingly, it is possible to further discharge the exhaust wind from the rear-portion exhaust wind port during traveling of the motorcycle and to increase the amount of the exhaust wind, which thereby further enhances the exhaust wind efficiency.
FIG.1 is a left side view of the motorcycle according to the embodiment of the present invention.
FIG.2 is a front view of the motorcycle according to the embodiment of the present invention.
FIG.3 is a left side view of the radiator side cowl arranged on the outer side of the radiator and the under cowl.
FIG.4 is a view of the radiator side cowl viewed from the direction of a line A-A in Fig. 1.
FIG.5 is a cross-sectional view of the radiator side cowl taken along a line B-B in Fig. 1.
FIG.6 is a cross-sectional view of the radiator side cowl taken along a line C-C in Fig. 1.
FIG.7 is a cross-sectional view of the radiator side cowl taken along a line D-D in Fig. 1.
FIG.8 is a cross-sectional view of the radiator side cowl taken along a line E-E in Fig. 1.
FIG.9 is a cross-sectional view of the radiator side cowl taken along a line F-F in Fig. 1.
Fig. 10 is a view of the rear exhaust wind port viewed from the direction of a line G-G in Fig. 1.
Fig. 11 is a left side view of the radiator side cowl.
Fig. 12 is a plan view of the radiator side cowl.
Fig. 13 is a cross-sectional view of the boss portion taken along a line H-H in Fig. 11.
Fig. 14 is cross-sectional view of the engaging piece taken along a line J-J in Fig. 11.

Hereinafter, the embodiment of the present invention will now be described with reference to drawings 1 to 14. In the embodiment of the present invention, the description will be made taking a motorcycle (a straddle type vehicle) as an example.

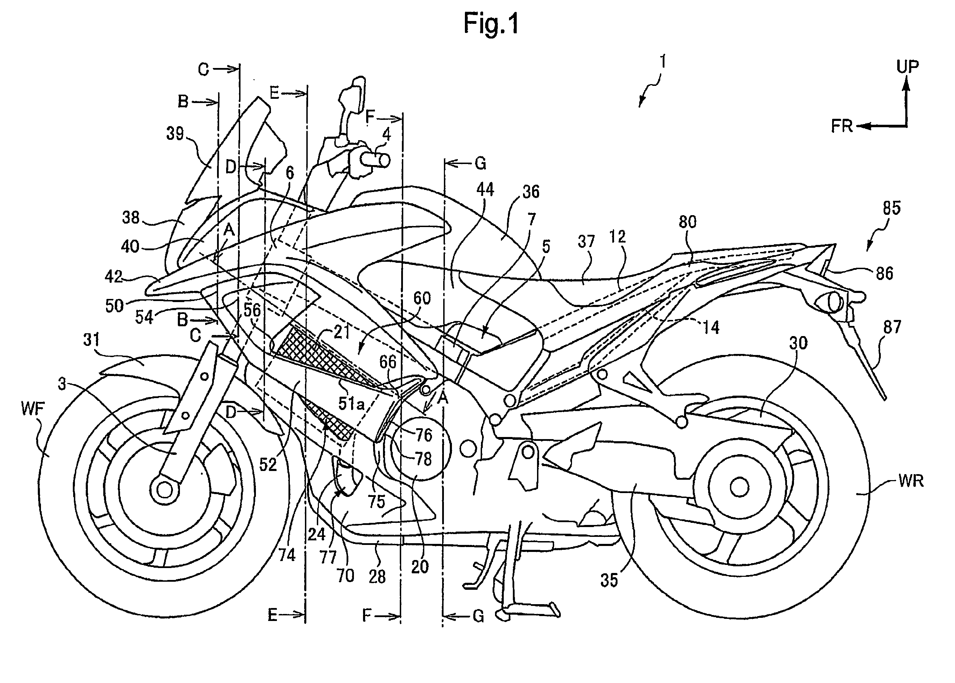

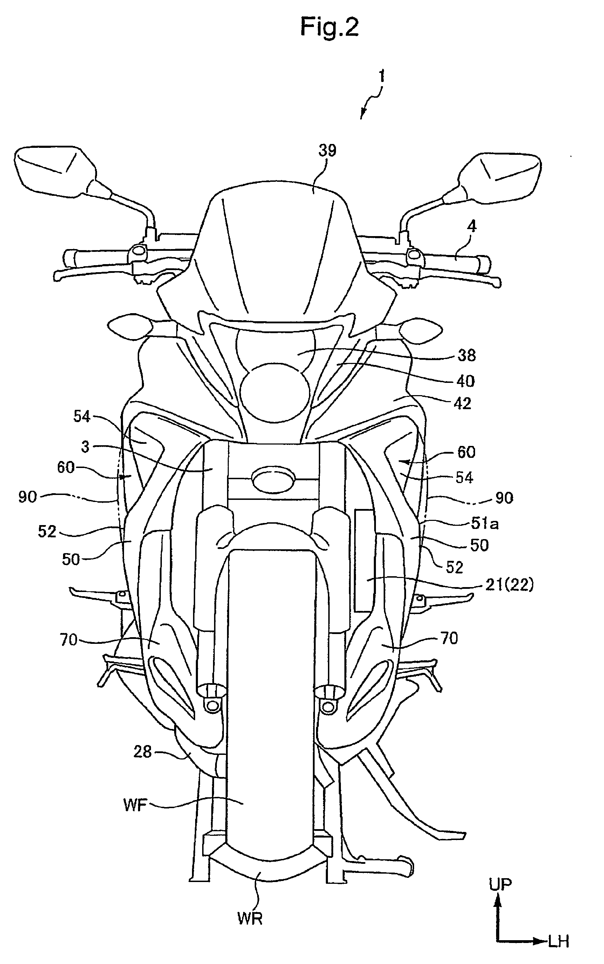

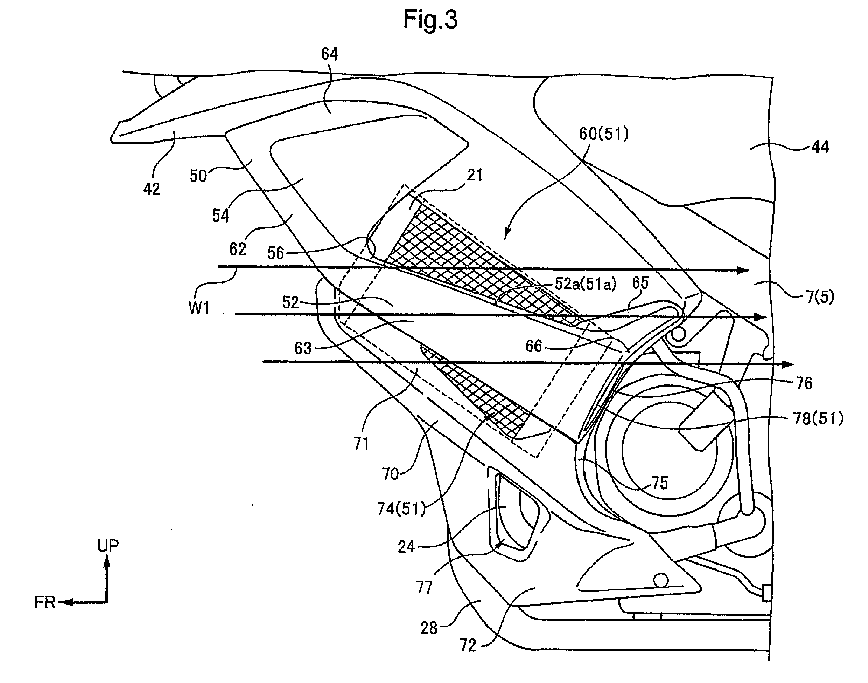

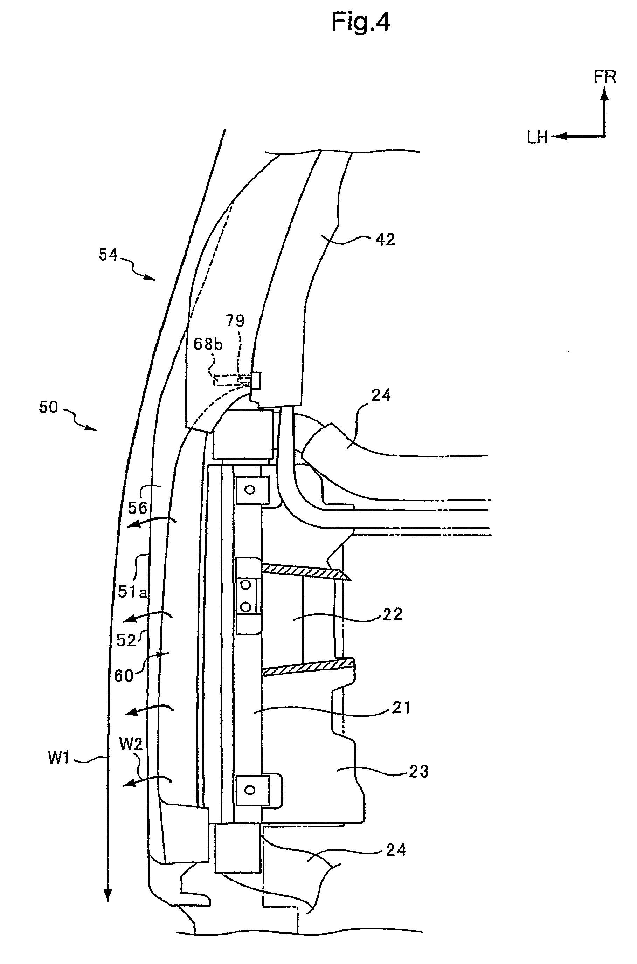

First, referring to Figs. 1 to 4, overall structure of a motorcycle 1 of the embodiment of the present invention will be described. Fig. 1 is a left side view of the motorcycle according to the embodiment of the present invention. FIG.2 is a front view of the motorcycle according to the embodiment of the present invention. FIG.3 is a left side view of the radiator side cowl arranged on the outer side of the radiator and the under cowl. FIG.4 is a view of the radiator side cowl viewed from the direction of a line A-A in Fig. 1. Here, directions such as 'front and rear' 'left and right' and `up and down' in the description below, unless otherwise stated, show those seen from a passenger (driver) riding on the motorcycle. Further, in the drawings, an arrow FR shows the front, an arrow LH shows the left and an arrow UP shows the upper of the vehicle body.

As shown in Figs. 1 and 2, the motorcycle 1 of the embodiment of the present invention mainly comprises a body frame 5; a front wheel WF; front forks 3 pivotally supporting the front wheel WF at the lower end portions thereof; a water-cooled engine 20 supported by the body frame 5; a radiator 21; a cooling fan 22 for cooling down the radiator 21; a rear wheel WR as a driving wheel; a swing arm 35 vertically swingably attached via a rear cushion (not shown) to the body frame 5 as well as pivotally supporting the rear wheel WR; a fuel tank 36; a passenger seat 37; a front fender 31; a muffler 30 for muffling the exhaust sound coming from the engine 20; a headlight 38; a windscreen 39; an upper side cowl 40; body cowls 42; a tank side cover 44; radiator side cowls 50; under cowls 70; a rear side cover 80 for covering the rear portion of the body frame 5 from the side; and a rear fender portion 85.

The body frame 5 is constructed such that several kinds of steels are integrally connected with each other such as by welding. As shown Fig. 1, the body frame 5 has a head pipe 6, main frames 7, seat rails 12 and rear subpipes 14.

The head pipe 6 is disposed on the front end portion of the body frame 5, and supports a pair of front forks 3 pivotally supporting the front wheel WF. The main frames 7 are provided on either side in a pair. A pair of main frames 7 extends obliquely rearward to the lower direction from the head pipe 6 in a side view. The seat rails 12 are provided on either side in a pair so as to extend rearward from the main frames 7. The rear subpipes 14 extend upwardly toward the rear from the lower portion of the rear of the main frames 7, and are connected to a pair of left and right seat rails 12 in the side view.

The front forks 3 are provided on either side in a pair. The upper end portions of a pair of front forks 3 are connected to the lower end portion of a handle 4. The upper end portions of a pair of front forks 3 are supported by a steering stem (not shown) rotatably and pivotally supported by the head pipe 6 and by a bridge (not shown) fixed to the upper and lower portions of the steering stem. The lower end portions of a pair of front forks 3 rotatably and pivotally supports the front wheel WF.

The engine 20 is a water-cooled engine which is cooled down by cooling water. The engine 20 is mounted on the substantially center portion of the body frame 5 in the front-and-rear direction. The engine 20 has an intake system (not shown) and an exhaust system (not shown). The intake system comprises an intake pipe, a carburetor and an air cleaner (not shown). The exhaust system (not shown) comprises an exhaust pipe 28 extending rearward from the engine 20 for discharging the exhaust gas and the muffler 30 joined to the rear end portion of the exhaust pipe 28 for muffling the exhaust sound.

The radiator 21 cools down the cooing water for cooling down the engine 20. The radiator 21 is configured in substantially rectangular parallelepiped shape, and is fixed to the side of the body frame 5 (main frame 7). The radiator 21 and the engine 20 are joined by a piping 24 for circulating the cooling water. In the circulate pathway, there is provided a water pump (not shown) for circulating the cooling water.

The cooling fan 22 shown in Fig. 2 has a fan shroud 23 (see Fig. 4) functioning as an enclosure, a motor unit (not shown) fixed to the fan shroud 23, and a cooling fan (not shown) arranged in the fan shroud 23 and rotationally driven by the motor unit. With such structure, the fan shroud 23 of the cooling fan 22 is integrally fixed to the radiator 21 in the width direction of the vehicle.

The front fender 31 is fixed to the front forks 3, and covers the upper of the front wheel WF. The fuel tank 36 reserves fuel to be supplied to the engine 20. The fuel tank 36 is arranged in the rear of the head pipe 6 as well as in front of the seat 37, and is disposed above the body frame 5. The passenger seat 37 is supported on the upper portion of a pair of seat rails 12.

The headlight 38 is arranged in front of the head pipe 6 as well as above the front fender 31, and irradiates the frontward of the vehicle body. The headlight 38 is fixed by a headlight supporting stay (not shown) which is fixed on the front portion of the body frame 5.

The windscreen 39 is a member functioning as a windshield, is arranged in front of the handle 4 as well as above the headlight 38. The windscreen 39, as shown in Fig. 1, is substantially truss-shaped so as to taper toward the top in a side view. Further, the windscreen 39, as shown in Fig. 2, is formed in a substantially rectangular-shape so as to become narrower in width toward the top in a front view. The windscreen 39 is fixed to the headlight supporting stay (not shown) which is fixed on the front portion of the body frame 5.

The upper side cowls 40 are disposed between the headlight 38 and the fuel tank 36 in a side view, and are provided on either side in a pair. The upper side cowls 40 are formed substantially truss-shaped in a side view. The upper side cowls 40 are fixed to the headlight supporting stay (not shown) for supporting the headlight 38 and to the body frame 5.

The body cowl 42 extends in the front-and-rear direction so as to cover the front portion of the fuel tank 36 and the front portion of the body frame 5 from the side, as well as is arranged so as to overlap the lower portion of the upper side cowl 40 from the outside. The body cowl 42 is fixed to the stay (not shown) extending from the head pipe 6, to the fuel tank 36 and to the main frames 7.

The tank side cover 44 extends in the front-and-rear direction, and covers the lower portion on the front side of the fuel tank 36 and the upper portion of the main frame 7 in a side view. The tank side cover 44 extends rearwardly in such a state to be wide up to the substantially center portion thereof in longitudinal direction in a side view, and thereafter becomes narrower in width toward the rear.
The rear side cover 80 covers the rear portion of the body frame 5 from the side. Specifically, the rear side cover 80 covers the lower portion on the rear side of the fuel tank 36 and the seat rails 12 from the side in a side view.

The rear fender portion 85 is provided on the rear end portion of the seat rails 12. The rear fender portion 85 has a tail light 86, a fender hanging portion 87 covering the upper of the rear portion of the rear wheel WR from the rear, an auxiliary light, a license plate and a reflector (not shown).

The radiator side cowls 50 are provided on either side in a pair on the outer side of the radiator 21. The radiator side cowls 50 extend from the front to the rear of the front forks 3 in a side view, and are arranged so as to cover the outer side of the radiator 21. The radiator side cowls 50 will be described later in detail.

The under cowls 70 are members covering the lower portion of the vehicle body are provided in a pair in the width direction of the vehicle as shown in Figs 1 and 2, and are disposed below the radiator side cowl 50. The under cowls 70 extend toward the rear from the lower portion on the front side of the radiator 21 in a side view, and are arranged so as to cover the lower portion of the engine 20. The under cowls 70 will be described later in detail.

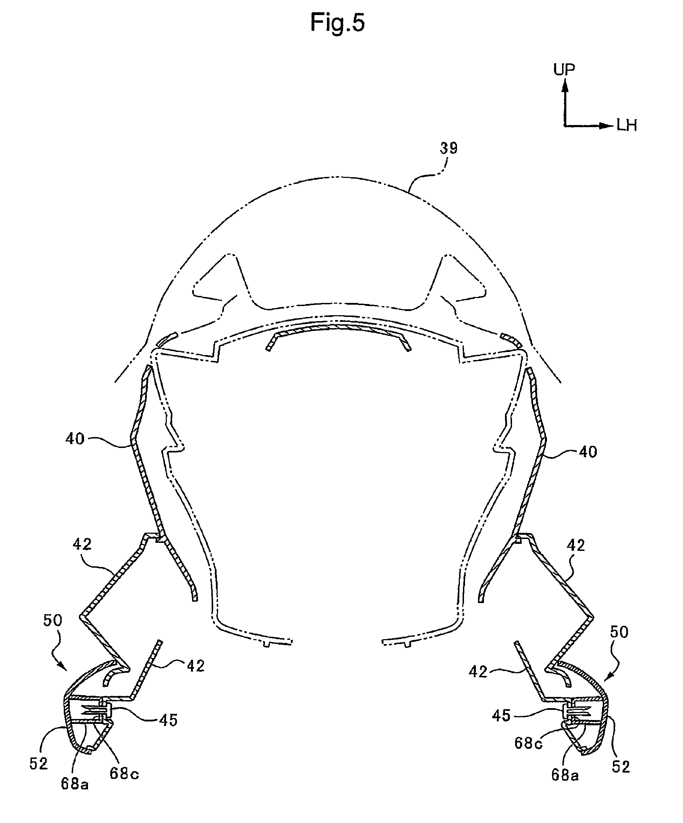

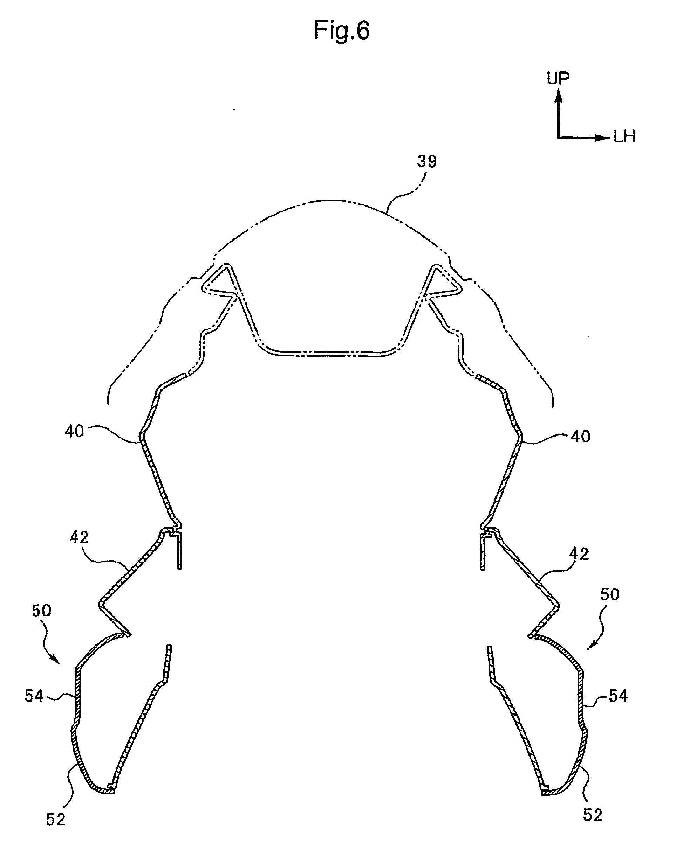

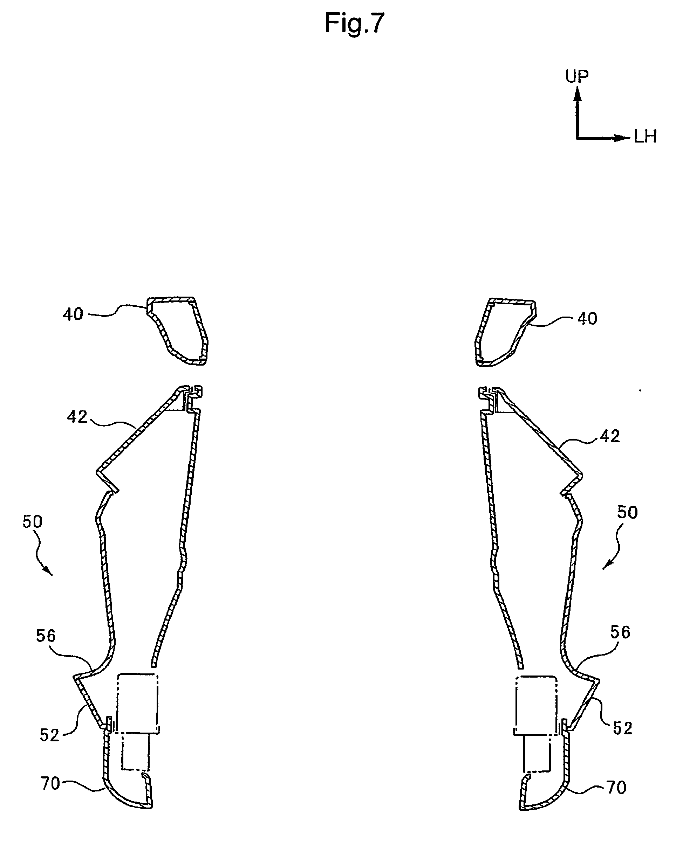

Next, referring to Figs. 3 to 14, the radiator side cowls 50 and the under cowls 70 of the motorcycle 1, which are distinctive portions in the embodiment of the present invention, will be described in detail. Fig. 5 is a cross-sectional view of the radiator side cowls taken along a line B-B in Fig. 1. FIG.6 is a cross-sectional view of the radiator side cowls taken along a line C-C in Fig. 1. FIG.7 is a cross-sectional view of the radiator side cowls taken along a line D-D in Fig. 1.

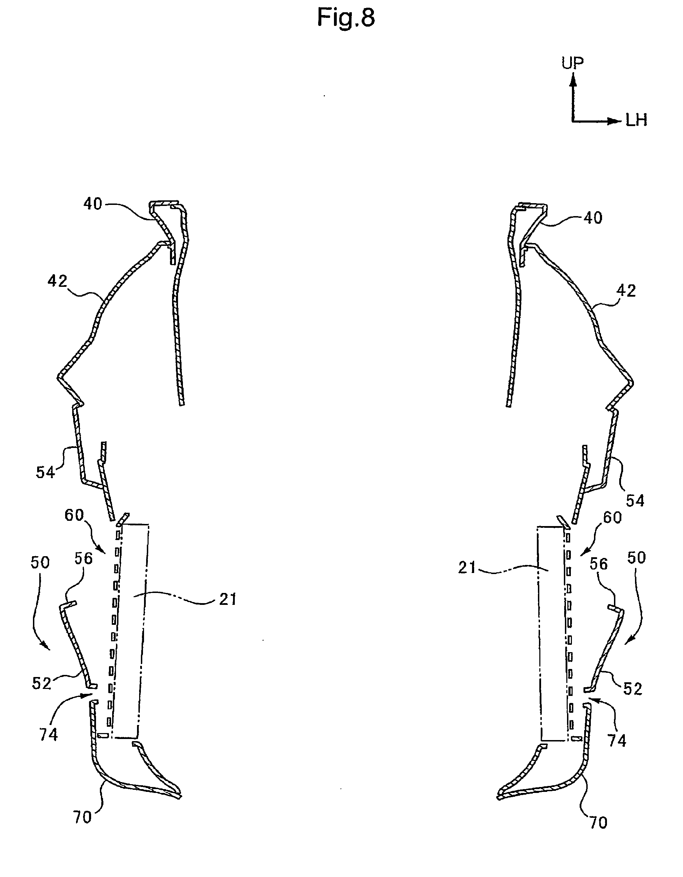

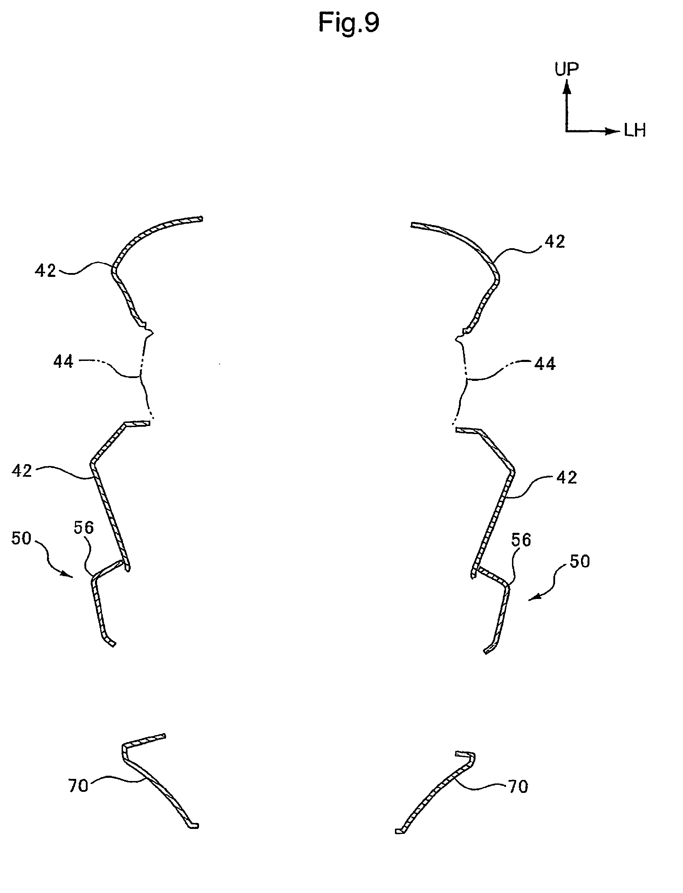

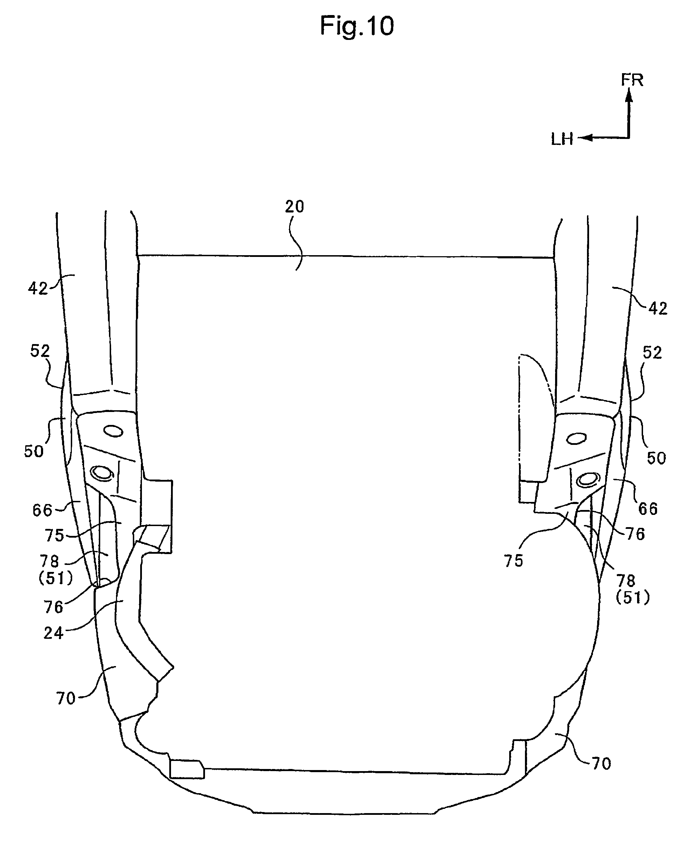

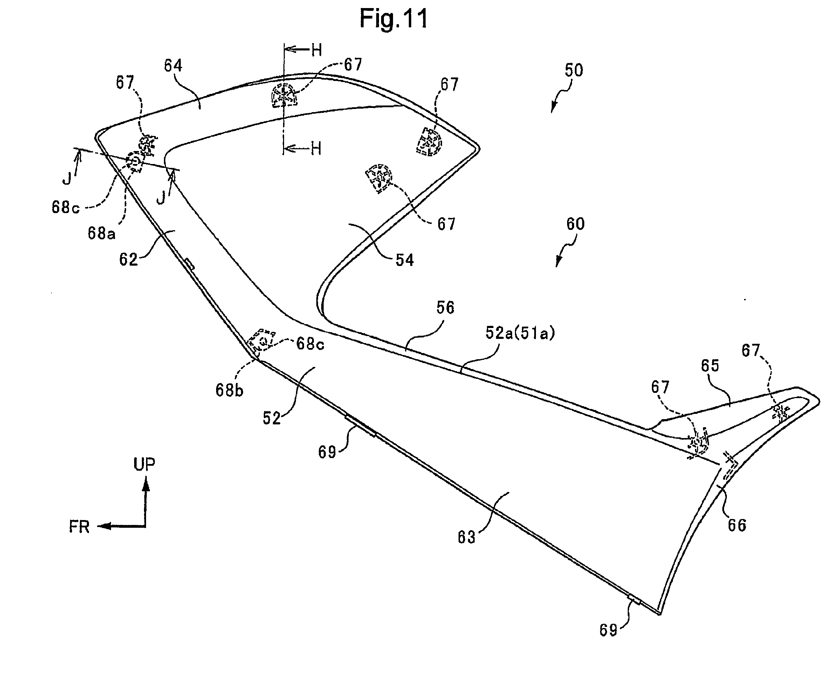

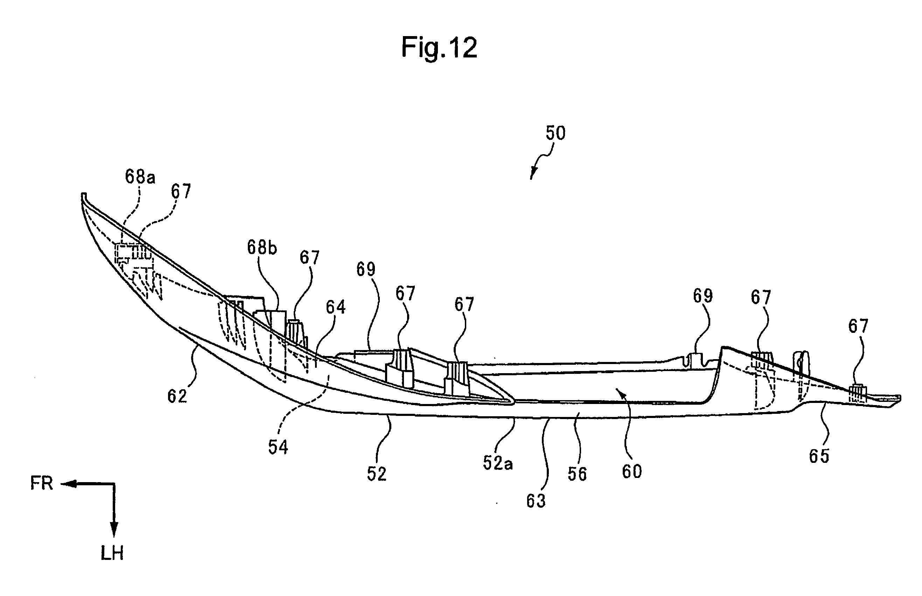

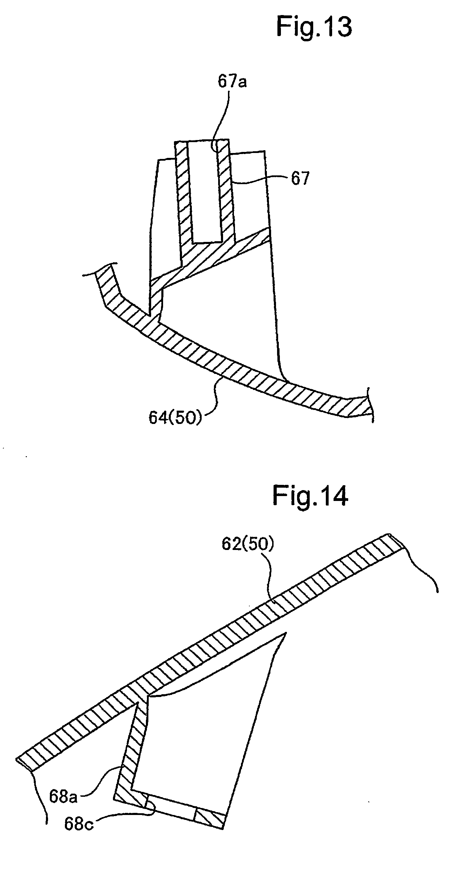

FIG.8 is a cross-sectional view of the radiator side cowls taken along a line E-E in Fig. 1. FIG.9 is a cross-sectional view of the radiator side cowls taken along a line F-F in Fig. 1. Fig. 10 is a view of the rear exhaust wind ports taken along a line G-G in Fig. 1. Fig. 11 is a left side view of the radiator side cowl. Fig. 12 is a plan view of the radiator side cowl. Fig. 13 is a cross-sectional view of the boss portion taken along a line H-H in Fig. 11. Fig. 14 is cross-sectional view of the engaging piece taken along a line J-J in Fig. 11.

First, the radiator side cowls 50 will be described. The radiator side cowls 50 are moldings made from synthetic resin. As shown in Figs. 2 and 5 to 9, the radiator side cowls 50 are provided in a pair in the width direction of the vehicle. A pair of radiator side cowls 50 has the substantially same configuration. Therefore, the radiator side cowl 50 on one side (on the left side of the vehicle) will be described in the description below, and a description of the radiator side cowl 50 on the other side is omitted here.

As shown in Figs. 3, 4, 11 and 12, the radiator side cowl 50 comprises a swelling face portion 52, a concave face portion 54, a stepped portion 56, a stepped-portion exhaust wind port 60, a rear face portion 66, a plurality of boss portions 67, engaging pieces 68a, 68b, and engaging claws 69.
The swelling face portion 52 is disposed on the lower portion of the radiator side cowl 50. As shown in a cross-sectional surface in Figs. 5 to 8, the swelling face portion 52 swells outward in the width direction of the vehicle with a smooth surface in the front-and-rear direction.

Referring to Figs. 11 and 12, the swelling face portion 52 will be further described in detail. As shown in Figs. 11 and 12, in a side view, the swelling face portion 52 comprises a first swelling face portion 62 disposed on the front portion thereof; a second swelling face portion 63 extending rearwardly from the rear portion of the first swelling face portion 62; a front edge portion 64 extending so as to be inclined upwardly toward the rear from the front portion of the first swelling face portion 62; and a rear edge portion 65 extending so as to be inclined upwardly toward the rear from the rear portion of second swelling face portion 63.

The first swelling face portion 62 is formed in a rectangular shape such that the width thereof in vertical direction remains substantially constant toward the rear. The second swelling face portion 63 (of the swelling face portion 52) is formed in spreading fan-like rectangular shape such that the width thereof in vertical direction becomes larger as it approaches the rear thereof. The front edge portion 64 is formed in a rectangular shape such that the width thereof in vertical direction remains substantially constant toward the rear, and is arranged spanning from the forward portion to the upper portion of the concave face portion 54. The rear edge portion 65 is formed in a substantially rectangular shape such that the width thereof in vertical direction becomes smaller as it approaches the rear thereof. The front portion of the rear edge portion 65 is concaved so as to be smoothly lowered from the rear to the front.

The concave face portion 54 is arranged on the front side of and above the radiator 21 in a side view (see Fig. 3), and has a concaved surface inside in the width direction of the vehicle. As shown in Fig. 11, the concave face portion 54 is enclosed by the first swelling face portion 62 and the front edge portion 64, and is formed in spreading fan-like shape such that the width thereof in vertical direction becomes larger as it approaches the rear thereof in the side view. Due to the concave face portion 54, as shown in Fig. 2, the width of the radiator side cowl 50 is narrower than the profile 90 (indicated by a double dot-dashed line) of a conventional radiator side cowl. That is, the presence of the concave face portion 54 allows the reduction in the frontal projected area of the vehicle.

As shown in Fig. 4, the stepped portion 56 extends in the width direction of the vehicle along the upper edge 52a of the swelling face portion 52, and joins the swelling face portion 52 and the concave face portion 54. The stepped portion 56 extends to the rear portion of the radiator side cowl 50.
The stepped-portion exhaust wind port 60 is arranged behind the concave face portion 54 as well as above the stepped portion 56. That is, the stepped-portion exhaust wind port 60 is a space enclosed by the concave face portion 54, the second swelling face portion 63 and the rear edge portion 65, and functions as an exhaust wind port.

As shown in Figs. 11 and 10, the rear face portion 66 is connected to the rear end of the second swelling face portion 63 and to the rear end of the rear edge portion 65, and extends from the rear ends to the inside in the width direction of the vehicle.

As shown in Figs. 11 to 13, a plurality of the boss portions 67 are provided on the upper portion of the front side and the upper portion of the rear side of the radiator side cowl 50 as well as on the inside surface (back surface) of the radiator side cowl 50 in the width direction of the vehicle. As shown in Figs. 12 and 13, the boss portions 67 protrude from the outside toward the inside in the width direction of the vehicle, and have holes 67a for providing tapping screws (not shown). The boss portions 67 are provided in the corresponding position to mounting portions (not shown) provided on the body cowl 42 (see Fig. 3). By connecting the mounting portions and the boss portions 67 with tapping screws, the body cowl 42 and the radiator side cowl 50 are fixed with each other.

As shown in Figs. 11, 12 and 14, engaging pieces 68a and 68b have through holes 68c, and are provided in a pair on the inside surface (back surface) of the first swelling face portion 62 in the width direction of the vehicle. The engaging piece 68a is provided on the front portion of the first swelling face portion 62.

Clips for engaging 45 (see Fig. 5) are inserted into the through holes 68c of the engaging pieces 68a at the lower portions of the body cowls 42 (see Fig. 5). Thereby, the front portion of the radiator side cowl 50 is engaged with the body cowls 42.
The engaging piece 68b is provided on the rear portion of the first swelling face portion 62. A clip for engaging 79 (see Fig. 4) is inserted into the through hole 68c of the engaging piece 68b at the upper portion of the under cowl 70 (see Fig. 3) which will be described later. Thereby, the upper portion of the under cowl 70 (see Fig. 3) is engaged with the radiator side cowl 50.

As shown in Figs. 11 and 12, engaging claws 69 are a pair of members protruding toward the inside in the width direction of the vehicle from the lower edge of the second swelling face portion 63. The upper portion of the under cowl 70 (see Fig. 3), which is described later, is engaged with the engaging claws 69.
With such configuration, as shown in Fig. 3, the radiator side cowl 50 is arranged such that the front edge portion 64 and rear edge portion 65 overlap the lower portion of the body cowl 42.

Next, the under cowl 70 will be described mainly referring to Fig. 3. The under cowl 70 is a molding made from synthetic resin, and as shown in Fig. 3, has a first face portion 71, a second face portion 72, a lower side exhaust wind port 74, rear face portion 75, cutout portion 76 and a through hole portion 77. The first face portion 71 extends in a substantially rectangular shape in the front-and-rear direction so as to cover the side surface of the lower portion of the radiator 21 in a side view. The second face portion 72 extends rearwardly from the lower edge portion in the substantially intermediate position of the first face portion 71 in the front-and-rear direction so as to cover the piping 24 of the radiator 21 in a side view.

The lower side exhaust wind port 74 is formed by being cut out such that the upper edge portion of the first face portion 71 is open upward. The lower side exhaust wind port 74 faces the radiator 21, and functions as an exhaust wind port.
As shown in Figs. 3 and 10, the rear face portion 75 extends from the rear edge portion of the first face portion 71 toward the inside in the width direction of the vehicle, and at the same time extends toward the rear portion of the body cowl 42. The rear face portion 75 is disposed behind the radiator 21 when the under cowl 70 is attached to the vehicle body.
The cutout portion 76 is formed by being cut out such that the rear face portion 75 is open outward in the width direction of the vehicle. The through hole portion 77 is provided on the second face portion 72.

With respect to the under cowl 70 configured as above, the radiator side cowl 50 is arranged such that the rear face portion 66 (rear portion) thereof covers the cutout portion 76 of the under cowl 70 from the side, as shown in Fig. 10. By such constitution, in the rear portion of the radiator side cowl 50, there is formed a rear-portion exhaust wind port 78 that is enclosed by the cutout portion 76 and the rear face portion 66 of the radiator side cowl 50. The rear-portion exhaust wind port 78 faces the rear portion of the radiator 21, and functions as an exhaust wind port.

Based on the motorcycle 1 of the embodiment of the present invention as described above, the following effects will be made.
In the motorcycle 1 of the embodiment of the present invention which has the body frame 5; the water-cooled engine 20; the radiator 21 arranged on the side of the body frame 5; and the radiator side cowl 50 arranged on the outer side of the radiator 21 and having the exhaust wind port which faces the radiator 21, and wherein an outside edge in the width direction of the vehicle 51a of the exhaust wind port of the radiator side cowl 50 is arranged with a space from the radiator 21, the radiator side cowl 50 comprises the swelling face portion 52, the concave face portion 54, the stepped portion 56 and the stepped-portion exhaust wind port 60 functioning as an exhaust wind port.

Therefore, while reducing the frontal projected area of the vehicle due to the presence of the concave face portion 54, the presence of the swelling face portion 52 allows the traveling wind W1 (see Figs. 3 and 4) to flow rearward smoothly as well as with a fast flow velocity. As a result, it is it is possible to discharge the traveling wind (exhaust wind) W2 (Fig. 4), which is used to cool down the cooling water of the radiator 21, efficiently from the stepped-portion exhaust wind port 60. Accordingly, while decreasing the running resistance by reducing the frontal projected area of the vehicle, it is possible to ensure the exhaust wind efficiency of the radiator 21 arranged on the side of the body frame 5.

In addition, in the motorcycle 1 of the embodiment of the present invention, the stepped portion 56 extends up to the rear portion of the radiator side cowl 50. Therefore, by arranging the stepped-portion exhaust wind port 60 up to the rear portion of the radiator side cowl 50, it is possible to extend the length thereof as long as possible in the front-and-rear direction of the vehicle. Accordingly, the amount of exhaust wind can be increased by increasing the area of the stepped-portion exhaust wind port 60, which thereby further improves the exhaust wind efficiency.

Further, in the motorcycle 1 of the embodiment of the present invention, the swelling face portion 52 is formed in spreading fan-like shape such that the width thereof in vertical direction becomes larger as it approaches the rear thereof. Thus, it is possible to increase the flow velocity of the traveling wind flowing over the swelling face portion 52 as it approaches the rear, and at the same time to increase the negative pressure of the exit side (downstream side) of the stepped-portion exhaust wind port 60, which can further enhance the exhaust wind efficiency.

Moreover, in the motorcycle 1 of the embodiment of the present invention, there is further provided the under cowl 70 arranged below the radiator side cowl 50 and covering the lower portion of the vehicle body. The under cowl 70 has the lower side exhaust wind port 74 facing the radiator 21. Accordingly, it is possible to increase the amount of exhaust wind by increasing the area of the exhaust wind port with a simple configuration, which thereby further improves the exhaust wind efficiency.

Additionally, in the motorcycle 1 of the embodiment of the present invention, the under cowl 70 has the rear face portion 75 and the cutout portion 76. The radiator side cowl 50 is arranged such that the rear face portion 66 thereof covers the cutout portion 76 from the side, and has the rear-portion exhaust wind port 78 which functions as an exhaust wind portion in such a way to be enclosed by the cutout portion 76 and the rear face portion 66 of the radiator side cowl 50. Accordingly, it is possible to further discharge the exhaust wind from the rear-portion exhaust wind port 78 during traveling of the motorcycle and to increase the amount of the exhaust wind, which thereby further enhances the exhaust wind efficiency.

Having thus described the specific embodiment of the present invention, it should be appreciated that the present invention is not limited to the above-described preferred embodiment, but that various modifications may be appropriately made.
For example, in the above-described embodiment of the present invention, the under cowl 70 has the cutout portion 76 which is formed by being cut out such that the rear face portion 75 is open outward in the width direction of the vehicle, but is not limited to, may be provided with a through hole in the rear face portion 75 for functioning as an exhaust wind port.

Further, in the above-described embodiment, the present invention is applied to the motorcycle 1 as a straddle type vehicle, but is not limited to, for example, may be applied to three-wheeled straddle type vehicles and four-wheeled vehicles for running on uneven ground. Namely, straddle type vehicles include vehicles in general on which a rider straddles to ride.
- 1: motorcycle (straddle type vehicle)
- 5: body frame
- 20: engine
- 21: radiator
- 50: radiator side cowl
- 51a: outside edge in the width direction of the vehicle
- 52: swelling face portion
- 52a: upper edge
- 54: concave face portion
- 56: stepped portion
- 60: stepped-portion exhaust wind port
- 66: rear face portion (rear portion)
- 70: under cowl
- 74: lower side exhaust wind port
- 75: rear face portion
- 76: cutout portion
- 78: rear-portion exhaust wind port

## Claims

1. A straddle type vehicle (1) which has a body frame (5); a water-cooled engine (20) supported by said body frame (5) and cooled down by cooling water; a radiator (21) arranged on the side of said body frame (5) and cooling down the cooling water; and a radiator side cowl (50) arranged on the outer side of said radiator (21) and having an exhaust wind port which faces said radiator (21), and wherein an outside edge in the width direction of the vehicle (51a) of said exhaust wind port of said radiator side cowl (50) is arranged with a distance to said radiator (21), **characterized in that**
said radiator side cowl (50) comprises a swelling face portion (52) disposed on the lower portion of said radiator side cowl (50) and swelling outward in the width direction of the vehicle with a smooth surface in the front-and-rear direction; a concave face portion (54) arranged in front of and above said radiator (21) in a side view and having a concaved surface inside in the width direction of the vehicle; a stepped portion (56) extending in the width direction of the vehicle along an upper edge (52a) of said swelling face portion (52) as well as joining said swelling face portion (52) and said concave face portion (54); and a stepped-portion exhaust wind port (60) arranged behind said concave face portion (54) as well as above said stepped portion (56) and functioning as said exhaust wind port.

2. The straddle type vehicle, according to Claim 1, **characterized in that** said stepped portion (56) extends to the rear portion of said radiator side cowl (50).

3. The straddle type vehicle, according to Claim 1 or 2, **characterized in that** said swelling face portion (52) is formed in spreading fan-like shape such that the width thereof in vertical direction becomes larger as it approaches the rear thereof.

4. The straddle type vehicle, according to any of Claims 1 to 3, **characterized in that** there is further provided an under cowl (70) arranged below said radiator side cowl (50) and covering the lower portion of the vehicle body, and **in that** said under cowl (70) has a lower side exhaust wind port (74) facing said radiator (21) and functioning as said exhaust wind port.

5. The straddle type vehicle, according to Claim 4, **characterized in that** said under cowl (70) has a rear face portion (75) disposed behind said radiator (21) and extending toward the inside in the width direction of the vehicle and a cutout portion (76) formed by being cut out such that said rear face portion (75) is open outward in the width direction of the vehicle, and **in that** said radiator side cowl (50) is arranged such that a rear portion (66) thereof covers said cutout portion (76) from the side, and has a rear-portion exhaust wind port (78) enclosed by said cutout portion (76) and said rear portion (66) and functioning as said exhaust wind port.

## Patentansprüche

1. Grätschsitzfahrzeug (1), das einen Karosserierahmen (5); einen wassergekühlten Motor (20), der durch den Karosserierahmen (5) getragen wird und der mittels Kühlwasser herunter gekühlt wird; einen Kühler (21), der auf der Seite des Karosserierahmens (5) angeordnet ist und der das Kühlwasser herunter kühlt; und eine Kühlerseitenverkleidung (50) hat, die auf einer äußeren Seite des Kühlers (21) angeordnet ist und eine Auslassluftströmungsöffnung hat, die dem Kühler (21) gegenüberliegt, und wobei in der Breitenrichtung des Fahrzeugs (51a) eine äußere Kante der Auslassluftströmungsöffnung der Kühlerseitenverkleidung (50) mit einem Abstand zu dem Kühler (21) angeordnet ist,
**dadurch gekennzeichnet, dass**
die Kühlerseitenverkleidung (50) einen Wölbungsflächenabschnitt (52), der in dem unteren Abschnitt der Kühlerseitenverkleidung (50) angeordnet ist und sich in der Breitenrichtung des Fahrzeugs mit einer glatten Oberfläche in der vorne-hinten Richtung nach außen wölbt; einen konkaven Flächenabschnitt (54), der in einer Seitenansicht vor und über dem Kühler (21) angeordnet ist und der eine Breitenrichtung des Fahrzeugs nach innen in der konkave Oberfläche hat; einen gestuften Abschnitt (56), der sich sowohl in der Breitenrichtung des Fahrzeugs entlang einer oberen Kante (52a) des Wölbungsflächenabschnitts (52) erstreckt als auch an den Wölbungsflächenabschnitt (52) und den konkaven Flächenabschnitt (54) angrenzt; und eine Auslassluftströmungsöffnung (60) des gestuften Abschnitts umfasst, der sowohl hinter den konkaven Flächenabschnitt (54) als auch über dem gestuften Abschnitt (56) angeordnet ist und der als Auslassluftströmungsöffnung wirkt.

2. Grätschsitzfahrzeug nach Anspruch 1,
**dadurch gekennzeichnet, dass** der gestufte Abschnitt (56) sich zu dem hinteren Abschnitt der Kühlerseitenverkleidung (50) erstreckt.

3. Grätschsitzfahrzeug nach Anspruch 1 oder 2,
**dadurch gekennzeichnet, dass** der Wölbungsflächenabschnitt (52) in einer sich fächerartig aufspreizenden Form gebildet ist, so dass seine Breite in der vertikalen Richtung größer wird als sie sich dem Ende davon nähert.

4. Grätschsitzfahrzeug nach einem der Ansprüche 1 bis 3,
**dadurch gekennzeichnet, dass** weiterhin eine untere Verkleidung (70) vorgesehen ist, die unter der Kühlerseitenverkleidung (50) angeordnet ist und die den unteren Abschnitt der Fahrzeugkarosserie abdeckt, und dass die untere Verkleidung (70) einen unteren Seitenauslassluftströmungsabschnitt (74) aufweist, der dem Kühler (21) gegenüberliegt und der als Auslassluftströmungsöffnung wirkt.

5. Grätschsitzfahrzeug nach Anspruch 4,
**dadurch gekennzeichnet, dass** die untere Verkleidung (70) einen hinteren Flächenabschnitt (45), der sich hinter dem Kühler (21) in der Breitenrichtung des Fahrzeugs nach innen erstreckt, und einen ausgeschnittenen Abschnitt (76) hat, der dadurch gebildet wird, dass er so ausgeschnitten wird, dass der hintere Flächenabschnitt (75) in der Breitenrichtung des Fahrzeugs nach außen offen ist und
dass die Kühlerseitenverkleidung (50) so angeordnet ist, dass deren hintere Abschnitt (66) den ausgeschnittenen Abschnitt (76) von der Seite her abdeckt und eine Auslassluftströmungsöffnung (78) des hinteren Abschnitts aufweist, die von dem ausgeschnittenen Abschnitt (76) und dem hinteren Abschnitt (66) eingeschlossen ist und als Auslassluftströmungsöffnung wirkt.

## Revendications

1. Véhicule de type à enfourcher (1) qui comprend une ossature de caisse (5) ; un moteur refroidi par de l'eau (20) supporté par ladite ossature de caisse (5) et refroidi par de l'eau de refroidissement ; un radiateur (21) agencé sur le côté de ladite ossature de caisse (5) et refroidissant l'eau de refroidissement ; et une calandre latérale de radiateur (50) agencée sur le côté externe dudit radiateur (21) et ayant un orifice de vent d'échappement qui fait face audit radiateur (21), et dans lequel un bord extérieur dans la direction de la largeur du véhicule (51a) dudit orifice de vent d'échappement de ladite calandre latérale de radiateur (50) est agencé à une distance dudit radiateur (21), **caractérisé en ce que**
ladite calandre latérale de radiateur (50) comprend une portion de face de gonflement (52) disposée sur la portion inférieure de ladite calandre latérale de radiateur (50) et gonflant vers l'extérieur dans la direction de la largeur du véhicule avec une surface lisse dans la direction avant-arrière ; une portion de face concave (54) agencée en face de et au-dessus dudit radiateur (21) dans une vue latérale et ayant une surface concave à l'intérieur dans la direction de la largeur du véhicule ; une portion étagée (56) s'étendant dans la direction de la largeur du véhicule le long d'un bord supérieur (52a) de ladite portion de face de gonflement (52) et reliant ladite portion de face de gonflement (52) et ladite portion de face concave (54) ; et un orifice de vent d'échappement de portion étagée (60) agencé derrière ladite portion de face concave (54) ainsi qu'au-dessus de ladite portion étagée (56) et fonctionnant comme ledit orifice de vent d'échappement.

2. Véhicule de type à enfourcher selon la revendication 1, **caractérisé en ce que** ladite portion étagée (56) s'étend la portion arrière de ladite calandre latérale de radiateur (50).

3. Véhicule de type à enfourcher selon la revendication 1 ou 2, **caractérisé en ce que** ladite portion de face de gonflement (52) est en forme de type éventail déployé de telle sorte que sa largeur dans la direction verticale s'agrandit à mesure qu'elle s'approche de son arrière.

4. Véhicule de type à enfourcher selon l'une quelconque des revendications 1 à 3, **caractérisé en ce qu'**une sous-calandre (70) agencée en dessous de ladite calandre latérale de radiateur (50) et couvrant la portion inférieure de la caisse de véhicule est en outre fourni, et **en ce que** ladite sous-calandre (70) a un orifice de vent d'échappement latéral inférieur (74) faisant face audit radiateur (21) et fonctionnant comme ledit orifice de vent d'échappement.

5. Véhicule de type à enfourcher selon la revendication 4, **caractérisé en ce que** ladite sous-calandre (70) a une portion de face arrière (75) disposée derrière ledit radiateur (21) et s'étendant vers l'intérieur dans la direction de la largeur du véhicule et une portion ajourée (76) formée en étant découpée de telle sorte que ladite portion de face arrière (75) est ouverte vers l'extérieur dans la direction de la largeur du véhicule, et **en ce que** ladite calandre latérale de radiateur (50) est agencée de telle sorte que sa portion de face arrière (66) couvre ladite portion ajourée (76) depuis le côté, et a un orifice de vent d'échappement de portion arrière (78) entouré par ladite portion ajourée (76) et ladite portion arrière (66) et fonctionnant comme ledit orifice de vent d'échappement.
